# EUROPÄISCHE PATENTANMELDUNG

(11) **EP 2 236 822 A1**
(43) Veröffentlichungstag der Anmeldung: **06.10.2010**
(21) Anmeldenummer: 09450070.9
(22) Anmeldetag: 01.04.2009
(51) Int. Cl.: F03D 9/02, F01K 25/10

(54) **Verfahren zur bedarfsabhängigen Regelung und Glättung der elektrischen Ausgangsleistung eines Energie-Wandlers sowie Vorrichtung zur Durchführung dieses Verfahrens**

(71) Anmelder: Hermeling, Werner, 7100 Neusiedl am See (AT)
(72) Erfinder: Hermeling, Werner, 7100 Neusiedl am See (AT)
(74) Vertreter: Haffner und Keschmann Patentanwälte OG

(57) **Zusammenfassung**

Bei einem Verfahren zur bedarfsabhängigen Regelung und Abgabe der elektrischen Ausgangsleistung eines mit regenerativer Energie betriebenen Energie-Wandlers, insbesondere elektrischen Kraftwerks, wird ein Gas in einer mit dem Energie-Wandler gekoppelten Vorrichtung verflüssigt. Das verflüssigte Gas wird vorzugsweise drucklos gespeichert und bei Bedarf regasifiziert, wobei die freiwerdende Energie in elektrische Energie umgewandelt und elektrischen Verbrauchern zur Verfügung gestellt wird. Die Vorrichtung zur bedarfsabhängigen Regelung und Glättung der elektrischen Ausgangsleistung eines mit regenerativer Energie betriebenen Energie-Wandlers, insbesondere elektrischen Kraftwerks, ist gekennzeichnet durch eine mit dem Energie-Wandler gekoppelte Gasverflüssigungsvorrichtung (4), einen Speicherbehälter (5) zur Speicherung des verflüssigten Gases, eine an den Speicherbehälter (5) angeschlossene Regasifizierungseinrichtung zum Regasifizieren des verflüssigten Gases, eine Expansionsmaschine, insbesondere Turbine (10), zum Entspannen des regasifizierten Gases und einen von der Expansionsmaschine angetriebenen elektrischen Generator (11), wobei die vom Generator (11) gelieferte elektrische Energie elektrischen Verbrauchern zur Verfügung gestellt ist. (Fig. 2)

## Beschreibung

Die Erfindung bezieht sich auf ein Verfahren zur bedarfsabhängigen Regelung und Abgabe der elektrischen Ausgangsleistung eines mit regenerativer Energie betriebenen Energie-Wandlers, insbesondere elektrischen Kraftwerks, sowie auf eine Vorrichtung zur Durchführung dieses Verfahrens.

Verfahren und Vorrichtungen zur Nutzung geothermer und regenerativer Energie, und insbesondere zur Umwandlung derartiger Energieformen in elektrische Energie, sind in unterschiedlichen Ausbildungen bekannt geworden. Speziell bei Wasserkraftwerken und insbesondere bei Verfahren und Vorrichtungen zur Nutzung der Windenergie, der Sonnenenergie oder der Gezeitenenergie wird häufig beobachtet, dass die jeweils von äußeren Bedingungen abhängige Erzeugung elektrischer Energie nicht ohne weiteres mit dem jeweiligen Bedarf in Einklang gebracht werden kann. So ist beispielsweise die Energiegewinnung bei Solaranlagen auf Sonnenlicht angewiesen, wobei eine erste Spitze des Energieverbrauchs üblicherweise dann auftritt, wenn nach Sonnenuntergang plötzlich elektrische Beleuchtungskörper eingeschaltet werden. Bei Energiequellen, welche zu allem Überfluss in ihrer Leistung nicht ohne weiteres vorhersagbar sind, und insbesondere bei der Nutzung von Windenergie, werden diese Nachteile bei der Verwendung von regenerativen Energiequellen besonders deutlich.

Zum Zwecke der Vergleichmäßigung bzw. Glättung der elektrischen Ausgangsleistung derartiger mit regenerativer Energie betriebener Energiewandler wurde bereits vorgeschlagen, die in Zeiten geringeren Bedarfs anfallende Energie entsprechend zu speichern. Elektrische Energie lässt sich zwar prinzipiell in Akkumulatoren speichern. Der für eine derartige Speicherung elektrischer Energie erforderliche Investitionsaufwand und der erforderliche Platzbedarf machen aber derartige Anstrengungen wirtschaftlich nicht vertretbar. Auch erscheint die Berücksichtigung standortbedingter Witterungsverhältnisse durch eine Blattwinkelverstellung der Rotorblätter einer Windkraftanlage nicht geeignet, die jeweils maximal erzeugbare elektrische Energie sinnvoll zu nutzen. Vielmehr wird durch derartige Maßnahmen auf die Produktion elektrischer Energie in Zeiten geringeren Bedarfs verzichtet, obwohl die vorhandene Windenergie eine derartige Produktion begünstigen würde. Um Schwankungen zwischen Energieerzeugung und Energieverbrauch besser ausgleichen zu können, ist es prinzipiell bekannt, Speichermedien einzusetzen, wobei als mechanische Speicher beispielsweise Schwungmassenspeicher in Betracht kommen. Es wurden auch supraleitende magnetische Energiespeicher, Batteriespeicherungsanlagen sowie chemische Energiespeicher auf Wasserstoffbasis vorgeschlagen. Insbesondere die vorgeschlagene Speicherung von Wasserstoff hat aber den Nachteil, dass aus Stabilitätsgründen keine beliebig großen Tanks gebaut werden können, wobei weiters dicke Gehäusemäntel vorgesehen werden müssen, um dem jeweils vorgesehenen Ladedruck standhalten zu können. Bei Einsatz von Wasserstoff als Speichermittel wurde auch bereits vorgeschlagen, Wasserstoff zu verflüssigen, wobei allerdings die im Wasserstoff gespeicherte Enthalpie bei der Entnahme wiederum ungenutzt verloren ging. Als Alternative zu Flüssigwasserstoff und zu gasförmigem und druckbeladenem Wasserstoff wurde daher die Speicherung von Wasserstoff in einem Metallhydridspeicher vorgeschlagen. Gegenüber einem Drucktank kann hier bei vergleichsweise niedrigerem Ladedruck gearbeitet werden. Derartige Speicher sind allerdings empfindlich auf die geforderte Reinheit des Wasserstoffs, um eine Langzeitstabilität sicherzustellen, und sind daher wartungsanfällig. Bei entsprechend häufigen Lade- und Entladezyklen eines Metallhydridspeichers muss der Spreicher unter Anwendung von hohen Temperaturen regeneriert werden, um Verunreinigungen zu entfernen, wodurch auch ein kontinuierlicher Betrieb nicht ohne weiteres gewährleistet ist.

Die DE 10307112 A1 zeigt und beschreibt ein Speichersystem, bei welchem Wasserstoff gespeichert wird und mit einer Brennstoffzelle als Stromgenerator oder einer Verbrennungsmaschine als Generatorantrieb verbunden ist. Zur Erzeugung von Wasserstoff wurden hierbei in aller Regel Elektrolyseanlagen eingesetzt, wodurch insgesamt keine optimalen Wirkungsgrade erzielt werden können und aufwendige Sicherheitseinrichtungen erforderlich sind.

Die EP 1783364 A2 zeigt und beschreibt ein Windkraftwerk, bei welchem Windenergie entweder unmittelbar in elektrische Energie unter Verwendung eines Generators umgewandelt wird, oder aber eine Kopplung an eine weitere Turbine erfolgt, mit welcher Luft komprimiert wird und wiederum in entsprechenden Speichern für komprimierte Luft zwischengespeichert werden kann. Ein derartiger Speicher für komprimierte Luft hat allerdings relativ hohe Abmessungen und hat daher einen hohen Platzbedarf, wobei weiters aufgrund des jeweiligen Drucks entsprechend dicke Behälterwände vorgesehen werden müssen, um der Druckbelastung standzuhalten.

Die Erfindung zielt nun darauf ab, ein Verfahren und eine Vorrichtung zu schaffen, mit welcher auf kleinstem Raum und mit vergleichsweise einfach bauenden Behältern ein entsprechendes Speichern des Speichermediums in umweltneutraler Weise ermöglicht wird, wobei weiters die bei Chemieanlagen erforderlichen Sicherheitseinrichtungen weitestgehend vermieden werden.

Zur Lösung dieser Aufgabe besteht das erfindungsgemäße Verfahren im Wesentlichen darin, dass ein Gas in einer mit dem Energie-Wandler gekoppelten Vorrichtung verflüssigt wird, dass das verflüssigte Gas vorzugsweise drucklos gespeichert wird und dass das verflüssigte Gas bei Bedarf regasifiziert und die freiwerdende Energie in elektrische Energie umgewandelt und elektrischen Verbrauchern zur Verfügung gestellt wird. Dadurch, dass das Gas zunächst verflüssigt wird und in verflüssigter Form gespeichert wird, kann mit vergleichsweise einfachen Einrichtungen das verflüssigte Gas bei Bedarf jeweils regasifiziert werden und die durch die Volumsvergrößerung bei der Regasifizierung entstehende frei werdende Energie in einfacher und konventioneller Weise wiederum in Energie umgewandelt werden und elektrischen Verbrauchern zur Verfügung gestellt werden. Das Verfahren eignet sich bevorzugt für die Verwendung von Luft, Bestandteilen davon wie Stickstoff oder anderen Gasen wie Methan, als Speichermedium und kann daher auf eine Reihe von Sicherheitseinrichtungen verzichten, die für Chemieanlagen erforderlich wären. Der Platzbedarf für die bevorzugt drucklose Speicherung von flüssigen Gasen ist hierbei wesentlich geringer, wobei das erfindungsgemäße Verfahren mit Vorteil so durchgeführt werden kann, dass das regasifizierte, unter hohem Druck stehende Gas über eine Expansionsmaschine, vorzugsweise eine Turbine, entspannt und die so gewonnene mechanische Energie mit Hilfe eines Generator in elektrische Energie umgewandelt wird.

Insgesamt kann somit für das erfindungsgemäße Verfahren mit konventionellen, umweltschonenden und einfachen Einrichtungen gearbeitet werden, sodass komplexe anlagentechnische Probleme, wie sie für die Speicherung von Energie in Form von chemischen Verbindungen erforderlich wären, entbehrlich erscheinen. Die für das Erzeugen elektrischer Energie vorgesehene Expansionsmaschine, die insbesondere von einer einfachen Turbine gebildet sein kann, muss hierbei lediglich mit einem Generator gekoppelt werden. Bei Verwendung von tiefkalten verflüssigten Gasen, welche im Wesentlichen drucklos gespeichert werden können, wird der bei der Regasifizierung entstehende hohe Druck unmittelbar gegen Atmosphäre abgegeben, sodass auch hier keine besonderen Sicherheitsvorkehrungen erforderlich erscheinen.

In besonders vorteilhafter Weise kann das erfindungsgemäße Verfahren so durchgeführt werden, dass das regasifierte, unter hohem Druck stehende Gas über eine erste Expansionsmaschine, vorzugsweise eine Turbine, auf einen niederen Druck entspannt wird, wobei sich das Gas abkühlt und danach erneut, vorzugsweise mit Umgebungswärme, erhitzt wird und wieder in einer nachfolgenden zweiten Expansionsmaschine, vorzugsweise Turbine, auf einen im Verhältnis zur vorherigen Entspannung niedrigeren Druck entspannt und dieser Vorgang der Zwischenüberhitzung und nachfolgenden Entspannung ggf. wiederholt wird bis die verbleibende Druckdifferenz im wesentlichen abgebaut ist. Durch diese Zwischenüberhitzung kann die Effizienz des Verfahrens durch Carnotisierung bzw. Steigerung der Ausgangstemperatur beim Expandieren erhöht werden, wodurch die Turbinenleistung massiv erhöht werden kann. Dadurch, dass zum Erhitzen die Umgebungswärme verwendet wird, erhält man die Energie für die Überhitzung mehr oder weniger kostenlos.

Mit Vorteil kann die Regasifizierung so vorgenommen werden, dass sie unter Verwendung eines Verfahrens zur zyklischen Kompression von tiefkalt verflüssigten Gasen erfolgt, wobei insbesondere bei dem gleichzeitig möglichen Betrieb einer derartigen Anlage als Abfüllanlage für kryogen gespeicherte Gase der erforderliche Betriebsdruck durch Druckabbau eingestellt werden kann, wobei die beim Druckabbau frei werdende Energie beispielsweise über eine Turbine rückgewonnen wird. In diesem Zusammenhang wird auf die WO 2007/128023 A1 verwiesen.

Dadurch, dass die Verflüssigung vorzugsweise durch Drosselung erfolgt und die anfallende Gasphase der Verflüssigung dem Gasverflüssiger wieder zugeführt wird, kann in einfacher Weise ein geschlossenes System betrieben werden.

In besonders vorteilhafter Weise kann das erfindungsgemäße Verfahren so durchgeführt werden, dass die bei der Entspannung entstehende Entspannungskälte bzw. Umwandlungsenthalpie zu Kühlzwecken oder zur Erzeugung einer Thermik genutzt wird, die einer Turbine mit angeschlossenem Generator zur Umwandlung in elektrische Energie zugeführt wird, die elektrischen Verbrauchern zur Verfügung gestellt wird. Die Verwendung der Umwandlungsenthalpie zu Kühlzwecken erlaubt es, diese üblicherweise nicht genutzte Energieform einer sinnvollen Verwendung zuzuführen, wobei, wie bereits eingangs erwähnt, mit Vorteil so vorgegangen wird, dass die Speicherung des verflüssigten Gases bei kryogener Temperatur, vorzugsweise bei atmosphärischem Druck erfolgt.

Dadurch, dass bevorzugter Weise das auf überkritische Bedingungen expandierte Gas über einen Abscheider zum Abtrennen flüssiger Anteile geführt wird und dass die flüssige Phase dem Tank und die Gasphase dem Verflüssiger zugeführt wird kann in einfacher Weise das flüssige Gas im Arbeit verrichtenden Kreislauf zirkuliert werden.

In besonders bevorzugter Weise wird das Verfahren so durchgeführt, dass tiefkalt verflüssigte Gase in einen Dosierbehälter verbracht werden und eine dosierte Menge einem Verdampfer zugeführt wird, worauf die verdampfte Gasmenge zur Energiegewinnung in der Turbine entspannt wird, worauf der Dosierbehälter neuerlich mit flüssigem Gas gefüllt wird und der Druck im zuletzt eingesetzten Verdampfer zum Auspressen des flüssigen Gases aus dem Dosierbehälter in einen weiteren Verdampfer herangezogen wird, wobei zyklisch jeweils voneinander verschiedene Verdampfer aus dem Dosierbehälter beschickt werden und der Druck im Dosierbehälter sowie erforderlichenfalls im jeweils zu befüllenden Verdampfer vor einem neuerlichen Einbringen einer dosierten Menge des verflüssigten Gases über die Turbine abgebaut wird. Dadurch wird erreicht, dass die notwendige Energie zur Regasifizierung und Druckerzeugung vorzugsweise der Umgebung entzogen wird.

Lediglich bei übermäßigem Anfall elektrischer Energie, welche mit den beschriebenen Maßnahmen nicht sinnvoll gespeichert werden kann, kann zusätzlich vorgesehen sein, dass die Luft einer kryogenen Gaszerlegung unterworfen wird.

Mit Vorteil ist die Verflüssigungsvorrichtung mit dem Energie-Wandler, insbesondere mit dem Generator des Energie-Wandlers, mechanisch gekoppelt.

Insgesamt eignet sich das erfindungsgemäße Verfahren bevorzugt für den Einsatz in Windkraftwerken.

Die erfindungsgemäße Vorrichtung zur bedarfsabhängigen Regelung und Glättung der elektrischen Ausgangsleistung eines mit regenerativer Energie betriebenen Energiewandlers, insbesondere elektrischen Kraftwerks, und insbesondere zur Durchführung des zuvor beschriebenen Verfahrens ist im Wesentlichen gekennzeichnet durch eine mit dem Energie-Wandler gekoppelte Gasverflüssigungsvorrichtung, einen Speicherbehälter zur Speicherung des verflüssigten Gases, eine an den Speicherbehälter angeschlossene Regasifizierungseinrichtung zum Regasifizieren des verflüssigten Gases, eine Expansionsmaschine, insbesondere Turbine, zum Entspannen des regasifizierten Gases und einen von der Expansionsmaschine angetriebenen elektrischen Generator, wobei die vom Generator gelieferte elektrische Energie elektrischen Verbrauchern zur Verfügung gestellt ist. Zur besseren Anpassung an die jeweiligen Bedürfnisse ist die Ausbildung hierbei bevorzugt so getroffen, dass Mittel zum Messen des elektrischen Leistungsbedarfes, insbesondere Kraftwerks, und eine Regelungseinrichtung vorgesehen sind, wobei die Regelungseinrichtung in Abhängigkeit von gemessenen elektrischen Verbrauchsdaten die Gasverflüssigungsvorrichtung oder die Regasifizierungseinrichtung ansteuert, wobei vorzugsweise eine Turbine mit angeschlossenem Generator zur Umwandlung der auf Grund der bei der Entspannung entstehenden Entspannungskälte bzw. Umwandlungsenthalpie erzeugten Thermik in elektrische Energie vorgesehen ist, zugeführt wird, wobei die vom Generator gelieferte elektrische Energie elektrischen Verbrauchern zur Verfügung gestellt ist.

Bevorzugt ist der Speicherbehälter als kryo-isolierter Tank für die drucklose Aufnahme des verflüssigten Speichermediums ausgebildet, wobei in besonders einfacher Weise als Gas Luft eingesetzt ist. Wie bereits erwähnt, können zusätzlich in einfacher Weise Mittel zur kryogenen Gaszerlegung der Luft vorgesehen sein, um überschüssige elektrische Energie weiteren Verwendungen zuführen zu können. Mit Vorteil ist die Ausbildung so getroffen, dass die Verflüssigungsvorrichtung mit dem Energie-Wandler, insbesondere mit dem Generator des Energie-Wandlers, mechanisch gekoppelt ist, wobei, wie bereits erwähnt, bevorzugt das Kraftwerk ein Windkraftwerk ist.

In bevorzugter Weise ist die Vorrichtung so ausgebildet, dass zwischen Gasverflüssigungseinrichtung und Expansionsmaschine ein Dosierbehälter und wenigstens zwei Verdampfer geschaltet sind. Dadurch lassen sich die beiden Verdampfer abwechselnd vom Dosierbehälter beschicken und in den jeweils anderen Verdampfer über die Turbine entspannen.

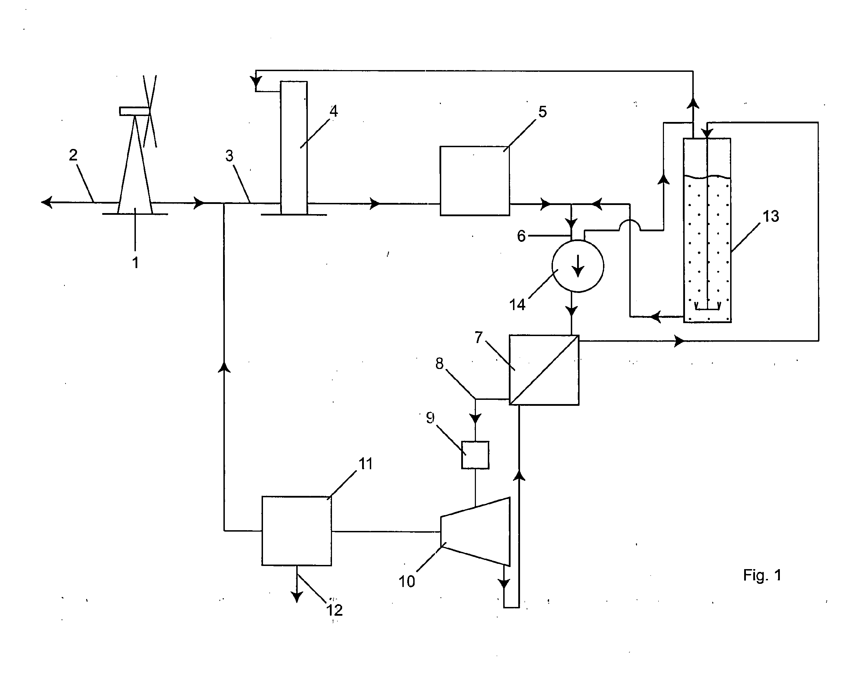

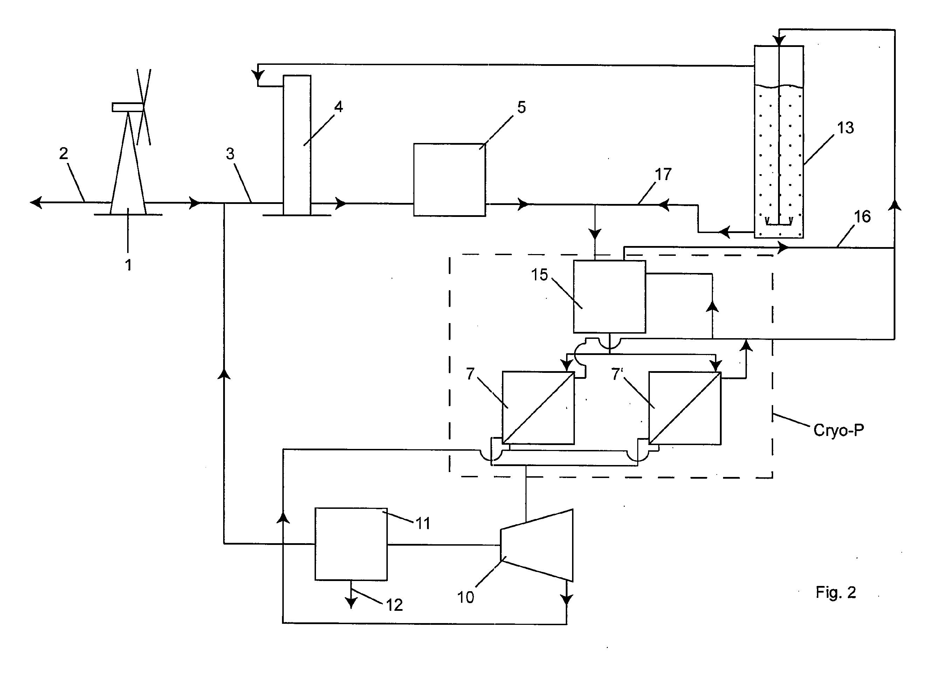

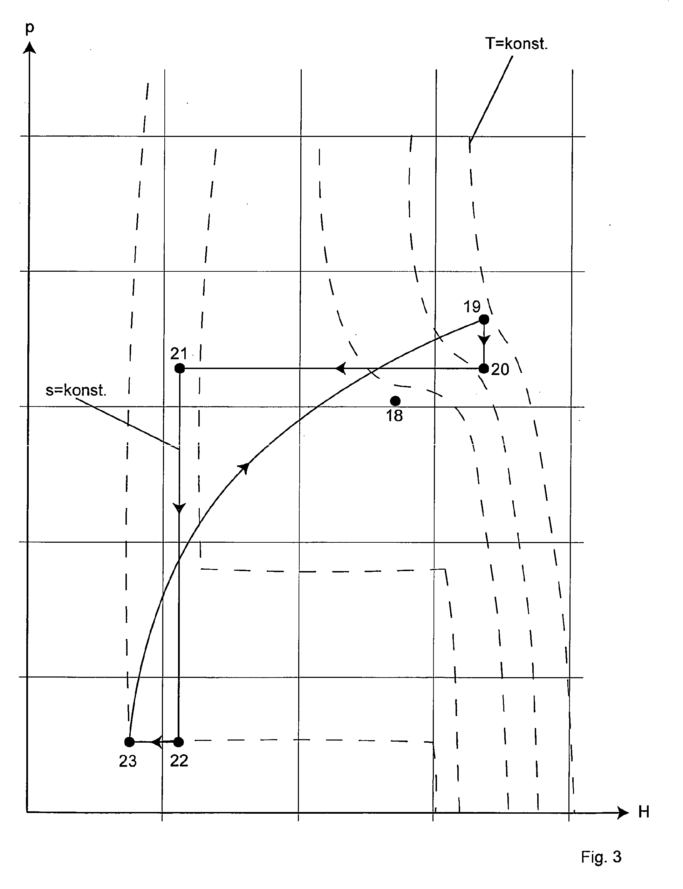

Die Erfindung wird nachfolgend anhand eines in der Zeichnung schematisch dargestellten Ausführungsbeispiels näher erläutert. In dieser zeigen Fig. 1 des erfindungsgemäße Vorrichtung in einer Ausführung die eine Pumpe notwendig macht, Fig. 2 eine erfindungsgemäße Vorrichtung in einer Ausführung in welcher das Gas kolbenlos und zyklisch ohne Verwendung einer Pumpe komprimiert wird und Fig. 3 ein p-H-Diagramm des Arbeitsmediums. In der Zeichnung ist mit 1 ein Windgenerator bezeichnet, wobei die vom Generator erzeugte elektrische Energie über die elektrische Leitung 2 in das Netz eingespeist werden kann. Sobald der Bedarf an elektrischer Energie, welche über die Leitung 2 in das Netz eingespeist wird, unter der jeweils erzeugten Energie liegt, kann über eine elektrische Leitung 3 Strom einer Luftverflüssigungsanlage 4 zugeführt werden, wobei die verflüssigte Luft in einen kryogenen Tank 5 gelangt. Zur Regasifikation wird die drucklos gespeicherte verflüssigte Luft über eine Leitung 6 einem Verdampfer 7 zugeführt, wobei durch die Volumszunahme bei der Verdampfung ein entsprechendes Druckgas über die Leitung 8 einem Zwischenspeicher 9 zur Vergleichmäßigung des Drucks zugeführt wird und über eine Turbine 10 geleitet wird, welche mit einem Generator 11 gekoppelt ist. Die im Generator 11 erzeugte elektrische Energie kann wiederum über die Leitung 12 in das Netz gespeist werden, wenn zusätzlich und ggf. die Produktion des Windkraftwerks 1 übersteigende Bedarfskennzahlen ermittelt werden, sodass zusätzlich zu dem über die Leitung 2 in das Netz gespeisten Strom auch über die Leitung 12 Strom in das Netz gespeist werden kann. In einem Abscheider 13 werden die flüssigen Gasanteile abgetrennt und die flüssige Phase wird dem Tank und die Gasphase dem Verflüssiger rückgeführt. Zu diesem Zweck und zu dem Zweck flüssiges Gas in den Verdampfer zu pressen ist eine Pumpe 14 notwendig.

In Fig. 2 wird ein Ausführungsbeispiel gezeigt, bei welchem keine Pumpe 14 notwendig ist. Die übrigen Bezugszeichen wurden beibehalten. Hier gelangt das flüssige Gas in einen Dosierbehälter 15, der in weiterer Folge abwechselnd die zwei nachgeschalteten Verdampfer 7 und 7' beschickt. In den Verdampfern 7, 7' wird die Luft auf 70 bar überhitzt und ist überkritisch bei Temperaturen, welche weit unter der Umgebungstemperatur liegen. Die jeweiligen Temperaturen liegen auf einem p-H-Diagramm rechtsseitig des kritischen Punktes. Dieser Zustand wird im Anschluss auf 40 bar über die Turbine 10 entspannt, welche gekoppelt mit dem Generator 11 über die Leitung 12 Strom ins Stromnetz freigeben kann. Durch die Entspannung fällt die Temperatur, wobei zur besseren Nutzung dieser Energie der Abluftstrom durch den Verdampfer 7, 7' geleitet wird, der als Kühler dient. Die Kühlung erfolgt mit flüssiger Luft, die durch den Drosselprozess im Abscheider 13 und der Luftverflüssigungsanlage 4 entstanden ist. Auf Grund der Druckdifferenz strömt das Gas nach der Turbine 10 in den jeweils anderen Verdampfer 7', 7, wobei die überkritische Luft weiter abgekühlt wird und ein Zustandspunkt linksseitig des kritischen Punktes auf dem p-H-Diagramm erreicht wird.

Der Dosierbehälter 15 wird dabei über die Leitung 16 in den Abscheider 13 auf Tankdruck, welcher bei 1-2 bar liegt, entspannt, wobei die flüssige Phase dem Tank und die Gasphase dem Verflüssiger wieder zugeführt wird. Diesmal ist keine Pumpe 14 notwendig, da die Gasphase von der Luftverflüssigungsanlage 4 angesaugt wird. Dies ist die Vorraussetzung für einen weitere Befüllung des Dosierbehälters. Ebenso wird die überkritische Luft nach der Abkühlung über die Turbine aus dem Verdampfer 7, 7', über den Abscheider 13 gedrosselt. Das anfallende Gas wird in die Luftverflüssigungsanlage 4 geleitet und die dadurch fehlende Menge in der flüssigen Phase wird aus dem kryogenen Tank 5, in welchem verflüssigtes Gas vorrätig ist, welcher Tank durch die Luftverflüssigungsanlage gespeist ist, nachgefüllt. Aus dem Abscheider 13 kann über die Leitung 17 auch der Dosierbehälter wieder mit flüssigem Gas gefüllt werden.

Dadurch, dass die über die Turbine entspannte Luft den Verdampfern 7, 7' als Kühlung wieder rückgeführt wird, herrscht dort die größte Temperaturdifferenz.

Fig. 3 zeigt ein p-H-Diagramm des arbeitenden Gases. Im Verdampfer 7, 7' befindet sich das Gas auf 100 bar überhitzt und ist überkritisch rechtsseitig des kritischen Punktes 18 auf dem Punkt 19, wobei die Temperatur weit unter der Umgebungstemperatur liegt. Im nächsten Schritt wird das Gas über die Turbine 13 auf 40 bar entspannt und erreicht den Punkt 20 bei gleichzeitigem Verlust an Temperatur. Das Gas wird im Anschluss weiter mittels flüssiger Luft, welcher aus dem Drosselprozess entstanden ist und der entspannten Luft über die Turbine abgekühlt bis ein Punkt 21 linksseitig des kritischen Punktes auf dem p-H-Diagramm erreicht wird. Bei dem Drosselprozess im Abscheider 13 fällt der Gasdruck auf Punkt 22. Beim Rückführen des flüssigen Gases fällt die Temperatur des Gases, wobei es sich an diesem Punkt im p-H-Diagramm auf Punkt 23 befindet, und wird anschließend wieder in den Dosierbehälter 15 geleitet.

Die Rückverflüssigung ist also prinzipiell zweimal in dem Prozess möglich. Einmal im Bereich des überhitzten Dampfes, von Punkt 20 zu Punkt 21 im p-H-Diagramm, wobei die Temperaturdifferenz sehr gering ist, die Wärmeaustauschflächen aber sehr groß sind. Ein zweites Mal ist die Rückverflüssigung nach dem Kühlen mit flüssigem Produkt im überkritischen Bereich möglich. Es wird hiermit versucht möglichst weit auf die linke Seite des kritischen Punktes zu kommen (Punkt 21), wobei ab dem Punkt 21 in Fig. 3 auf einen Druck nahen dem Umgebungsdruck gedrosselt werden kann (Punkt 22). Dabei fällt zwangsläufig der größte Anteil der flüssigen Phase aus und es entsteht der kleinste Anteil an Gas. Diese zweite Drosselung macht dieses Verfahren besonders wirtschaftlich.

## Patentansprüche

1. Verfahren zur bedarfsabhängigen Regelung und Abgabe der elektrischen Ausgangsleistung eines mit regenerativer Energie betriebenen Energie-Wandlers, insbesondere elektrischen Kraftwerks, **dadurch gekennzeichnet, dass** ein Gas in einer mit dem Energie-Wandler gekoppelten Vorrichtung verflüssigt wird, dass das verflüssigte Gas vorzugsweise drucklos gespeichert wird und dass das verflüssigte Gas bei Bedarf regasifiziert und die freiwerdende Energie in elektrische Energie umgewandelt und elektrischen Verbrauchern zur Verfügung gestellt wird.

2. Verfahren nach Anspruch 1, **dadurch gekennzeichnet, dass** das regasifizierte, unter hohem Druck stehende Gas über eine Expansionsmaschine, vorzugsweise eine Turbine, auf überkritische Bedingungen entspannt und die so gewonnene mechanische Energie mit Hilfe eines Generator in elektrische Energie umgewandelt wird.

3. Verfahren nach Anspruch 1 und 2, **dadurch gekennzeichnet, dass** das regasifierte, unter hohem Druck stehende Gas über eine erste Expansionsmaschine, vorzugsweise eine Turbine, auf einen niederen Druck entspannt wird, wobei sich das Gas abkühlt und danach erneut, vorzugsweise mit Umgebungswärme, erhitzt wird und wieder in einer nachfolgenden zweiten Expansionsmaschine, vorzugsweise Turbine, auf einen im Verhältnis zur vorherigen Entspannung niedrigeren Druck entspannt und dieser Vorgang der Zwischenüberhitzung und nachfolgenden Entspannung ggf. wiederholt wird bis die verbleibende Druckdifferenz im wesentlichen abgebaut ist.

4. Verfahren nach einem der Ansprüche 1 bis 3, **dadurch gekennzeichnet, dass** die Regasifizierung unter Verwendung eines Verfahrens zur zyklischen Kompression von tiefkalt verflüssigten Gasen erfolgt.

5. Verfahren nach einem der Ansprüche 1 bis 4, **dadurch gekennzeichnet, dass** die bei der Entspannung entstehende Entspannungskälte bzw. Umwandlungsenthalpie zu Kühlzwecken oder zur Erzeugung einer Thermik genutzt wird, die einer Turbine mit angeschlossenem Generator zur Umwandlung in elektrische Energie zugeführt wird, die elektrischen Verbrauchern zur Verfügung gestellt wird.

6. Verfahren nach einem der Ansprüche 1 bis 5, **dadurch gekennzeichnet, dass** als Gas Luft eingesetzt wird.

7. Verfahren nach einem der Ansprüche 1 bis 6, **dadurch gekennzeichnet, dass** die Luft einer kryogenen Gaszerlegung unterworfen wird.

8. Verfahren nach einem der Ansprüche 1 bis 7, **dadurch gekennzeichnet, dass** das Kraftwerk ein Windkraftwerk ist.

9. Verfahren nach einem der Ansprüche 1 bis 8, **dadurch gekennzeichnet, dass** das auf überkritische Bedingungen expandierte Gas über einen Abscheider zum Abtrennen flüssiger Anteile geführt wird und dass die flüssige Phase dem Tank und die Gasphase dem Verflüssiger zugeführt wird.

10. Verfahren nach einem der Ansprüche 1 bis 9, **dadurch gekennzeichnet**, **dadurch gekennzeichnet, dass** die Verflüssigung vorzugsweise durch Drosselung erfolgt und die anfallende Gasphase der Verflüssigung dem Gasverflüssiger wieder rückgeführt wird.

11. Verfahren nach einem der Ansprüche 1 bis 10, **dadurch gekennzeichnet, dass** tiefkalt verflüssigte Gase in einen Dosierbehälter verbracht werden und eine dosierte Menge einem Verdampfer zugeführt wird, worauf die verdampfte Gasmenge zur Energiegewinnung in der Turbine entspannt wird, worauf der Dosierbehälter neuerlich mit flüssigem Gas gefüllt wird und der Druck im zuletzt eingesetzten Verdampfer zum Auspressen des flüssigen Gases aus dem Dosierbehälter in einen weiteren Verdampfer herangezogen wird, wobei zyklisch jeweils voneinander verschiedene Verdampfer aus dem Dosierbehälter beschickt werden und der Druck im Dosierbehälter sowie erforderlichenfalls im jeweils zu befüllenden Verdampfer vor einem neuerlichen Einbringen einer dosierten Menge des verflüssigten Gases über die Turbine abgebaut wird.

12. Vorrichtung zur bedarfsabhängigen Regelung und Abgabe der elektrischen Ausgangsleistung eines mit regenerativer Energie betriebenen Energie-Wandlers, insbesondere elektrischen Kraftwerks, insbesondere zur Durchführung des Verfahrens nach einem der Ansprüche 1 bis 11, **gekennzeichnet durch** eine mit dem Energie-Wandler gekoppelte Gasverflüssigungsvorrichtung (4), einen Speicherbehälter (5) zur Speicherung des verflüssigten Gases, eine an den Speicherbehälter (5) angeschlossene Regasifizierungseinrichtung zum Regasifizieren des verflüssigten Gases, eine Expansionsmaschine, insbesondere Turbine (10), zum Entspannen des regasifizierten Gases und einen von der Expansionsmaschine angetriebenen elektrischen Generator (11), wobei die vom Generator (11) gelieferte elektrische Energie elektrischen Verbrauchern zur Verfügung gestellt ist.

13. Vorrichtung nach Anspruch 12, **dadurch gekennzeichnet, dass** Mittel zum Messen des elektrischen Leistungsbedarfes, insbesondere Kraftwerks, und eine Regelungseinrichtung vorgesehen sind, wobei die Regelungseinrichtung in Abhängigkeit von gemessenen elektrischen Verbrauchsdaten die Gasverflüssigungsvorrichtung (4) oder die Regasifizierungseinrichtung ansteuert.

14. Vorrichtung nach Anspruch 12 oder 13, **dadurch gekennzeichnet, dass** eine Turbine (10) mit angeschlossenem Generator (11) zur Umwandlung der auf Grund der bei der Entspannung entstehenden Entspannungskälte bzw. Umwandlungsenthalpie erzeugten Thermik in elektrische Energie vorgesehen ist, zugeführt wird, wobei die vom Generator (11) gelieferte elektrische Energie elektrischen Verbrauchern zur Verfügung gestellt ist.

15. Vorrichtung nach Anspruch 12, 13 oder 14, **dadurch gekennzeichnet, dass** der Speicherbehälter (5) als kryo-isolierter Tank ausgebildet ist.

16. Vorrichtung nach einem der Ansprüche 12 bis 15, **dadurch gekennzeichnet, dass** als Gas Luft eingesetzt ist.

17. Vorrichtung nach einem der Ansprüche 12 bis 16, **dadurch gekennzeichnet, dass** Mittel zur kryogenen Gaszerlegung der Luft vorgesehen sind.

18. Vorrichtung nach einem der Ansprüche 12 bis 17, **dadurch gekennzeichnet, dass** die Verflüssigungsvorrichtung mit dem Energie-Wandler, insbesondere mit dem Generator (11) des Energie-Wandlers, mechanisch gekoppelt ist.

19. Vorrichtung nach einem der Ansprüche 12 bis 18, **dadurch gekennzeichnet, dass** zwischen Gasverflüssigungseinrichtung (4) und Expansionsmaschine ein Dosierbehälter (15) und wenigstens zwei Verdampfer (7, 7') geschaltet sind.
